# FASCICULE DE BREVET EUROPEEN

(11) **EP 0 583 183 B1**
(45) Date de publication et mention de la délivrance du brevet: **26.11.1997**
(21) Numéro de dépôt: 93401846.6
(22) Date de dépôt: 19.07.1993
(51) Int. Cl.: F16L 37/10

(54) **Dispositif de raccordement et son procédé de réalisation**
Kupplung zum Verbinden von Leitungen
Coupling device for connecting tubes

(30) Priorité: 12.08.1992 FR 9209947
(43) Date de publication de la demande: 16.02.1994
(73) Titulaire: HUTCHINSON, F-75008 Paris (FR)
(72) Inventeur: Godeau, Denis, F-45260 Vieilles Maisons (FR)
(74) Mandataire: Orès, Bernard

(56) Documents cités:
- DE-A- 4 037 308
- FR-A- 2 308 856
- FR-A- 2 357 809
- US-A- 4 844 408

## Description

La présente invention se rapporte principalement à une platine et à un embout pour dispositif de raccordement de conduites tubulaires, notamment pour un moteur thermique d'un véhicule automobile.

Un moteur thermique d'un véhicule automobile, notamment un moteur à essence, comporte de nombreux circuits de fluides. Ces circuits comportent des éléments devant être interconnectés de façon étanche. Il est primordial d'assurer cette étanchéité durant toute la vie du moteur y compris dans des conditions d'utilisation sévère étant donné que toute fuite d'un circuit de fluide d'un moteur thermique d'un véhicule automobile risque de provoquer des dommages difficilement réparables au moteur.

Ainsi, pour des raisons de fiabilité, les constructeurs automobiles ont adopté pour les moteurs thermiques modernes des connecteurs rapides permettant de garantir l'étanchéité des circuits de fluides. De plus, le raccordement des connecteurs rapides est aisément robotisable.

Toutefois, les consommateurs recherchent des véhicules présentant une habitabilité maximale pour un encombrement minimal et les constructeurs ont donc été amenés à essayer de réduire l'encombrement du moteur dans le véhicule en mettant en oeuvre des circuits de fluides de géométries complexes permettant d'utiliser au mieux l'espace disponible.

Il en a résulté une adaptation des dispositifs de raccordement des conduites tubulaires, notamment des tuyaux d'eau du circuit de refroidissement, à l'implantation et à la géométrie du moteur, nécessitant de développer un outillage spécifique, notamment un moule spécifique, pour le moulage d'un insert en matière plastique monté à l'extrémité d'une conduite tubulaire typiquement réalisée en élastomère, pour chaque véhicule ou au moins pour chaque moteur.

Si la Demande de Brevet FR 2.669.711 propose un accouplement multiple pour la solidarisation de conduits qui met en oeuvre des pièces reliées par un support flexible un tel accouplement ne permet pas d'atteindre la précision d'un dispositif dont la configuration est exactement adaptée à celle du moteur. De plus, ce document n'évoque pas la possibilité de mise en oeuvre d'embouts coudés et l'orientation précise d'un ou de coude(s) selon la configuration désirée.

C'est, par conséquent, un but de la présente invention d'offrir un dispositif de raccordement rapide susceptible d'être adapté à diverses configurations de moteurs.

C'est, également, un but de la présente invention d'offrir un tel dispositif susceptible d'être assemblé à partir d'un nombre réduit de pièces.

C'est, aussi, un but de la présente invention d'offrir un tel dispositif permettant un raccordement précis.

C'est, également, un but de la présente invention d'offrir un tel dispositif permettant la réalisation d'une connexion fiable avec de grandes tolérances de fabrication.

C'est, aussi, un but de la présente invention d'offrir un tel dispositif assurant une connexion rapide et sûre.

C'est, enfin, un but de la présente invention d'offrir un tel dispositif de connexion permettant de regrouper un nombre important de conduites tubulaires.

Ces buts sont atteints par la mise en oeuvre d'éléments modulaires susceptibles d'être assemblés de diverses manières, adaptés à diverses configurations de moteurs.

L'invention a principalement pour objet une platine de raccordement d'au moins un embout à un circuit de fluide d'un moteur thermique, caractérisée en ce qu'elle comporte au moins une carcasse dans laquelle est pratiquée une ouverture de réception d'un embout d'une conduite tubulaire et des moyens de blocage en rotation autour de son axe dudit embout dans une pluralité d'orientations prédéterminées, et en ce que le nombre de rainures des moyens de blocage de la platine est supérieur au nombre de nervures de l'embout.

L'invention a également pour objet une platine caractérisée en ce que les moyens de blocage en rotation autour de son axe de l'embout dans une pluralité d'orientations prédéterminées comportent des rainures de .. réception d'une nervure de l'embout.

L'invention a aussi pour objet une platine caractérisée en ce qu'elle comporte deux ouvertures de réception de deux embouts.

L'invention a également pour objet une platine caractérisée en ce qu'elle comporte des éléments de liaison semi-rigides ou souples reliant les carcasses dans lesquelles ont été pratiquées des ouvertures de réception d'un embout .

L'invention a aussi pour objet une platine telle qu'elle vient d'être définie caractérisée, complémentairement, en ce qu'elle comporte des moyens de verrouillage des embouts disposés dans les ouvertures, notamment des évidements ou des ouvertures de réception d'un bossage pratiqué sur l'embout.

Selon une autre caractéristique de l'invention, la platine comporte une gorge de réception des extrémités d'une épingle de verrouillage du dispositif de raccordement.

L'invention a aussi pour objet un embout, notamment coudé, susceptible d'être assemblé avec une platine telle que définie ci-dessus et caractérisé en ce qu'il comporte des moyens de verrouillage en rotation autour de son axe dans des orientations prédéterminées, susceptibles de coopérer avec les moyens de blocage en rotation de la platine.

L'invention a également pour objet un dispositif de raccordement de conduites tubulaires à un circuit de fluide d'un moteur thermique, notamment aux tuyaux d'eau d'un circuit de refroidissement, caractérisé en ce qu'il comporte une platine selon l'invention et au moins un, de préférence deux, embouts selon l'invention, bloqués en rotation autour de leurs axes dans une des orientations prédéterminées.

L'invention a aussi pour objet un procédé de fabrication d'un dispositif de raccordement de conduites tubulaires à un circuit de fluide d'un moteur thermique, caractérisé en ce qu'il comporte une étape consistant à insérer au moins un embout coudé présentant une orientation prédéterminée, désirée, par rapport à son axe dans une ouverture de réception d'une platine, ladite platine comportant un nombre de rainures de réception de nervures de l'embout supérieur au nombre de nervures dudit embout.

L'invention a également pour objet un tel procédé caractérisé en ce qu'il comporte en outre une étape préalable de détermination de la forme et de l'orientation de l'embout, adaptées de façon optimale à la configuration d'un moteur thermique et une étape consistant à choisir la configuration prédéterminée la plus proche de cette configuration adaptée de façon optimale.

L'invention sera mieux comprise au moyen de la description ci-après et des figures annexées données comme exemples non limitatifs et sur lesquels :
- la figure 1 est une vue en élévation frontale d'un premier exemple de réalisation d'une platine selon la présente invention ;
- la figure 2 est une vue en élévation frontale d'un deuxième exemple de réalisation d'une platine selon la présente invention ;
- la figure 3 est une vue en plan de la platine de la figure 2 ;
- la figure 4 est une vue en élévation frontale d'un troisième exemple de réalisation d'une platine selon la présente invention ;
- la figure 5 est une vue en élévation frontale d'un quatrième exemple de réalisation d'une platine selon la présente invention ;
- la figure 6 est une vue en élévation frontale d'un cinquième exemple de réalisation d'une platine selon la présente invention ;
- la figure 7 est une vue axonométrique d'un sixième exemple de réalisation d'une platine selon la présente invention ;
- la figure 8 est une vue en élévation latérale d'un premier exemple de réalisation d'un embout selon la présente invention ;
- la figure 9 est une vue en élévation frontale de l'embout de la figure 8 ;
- la figure 10 est une vue en élévation latérale d'un deuxième exemple de réalisation d'un embout selon la présente invention ;
- la figure 11 est une vue en élévation latérale d'un troisième exemple de réalisation d'un embout selon la présente invention ;
- la figure 12 est une vue schématique en perspective d'un dispositif de connexion selon la présente invention dans une première configuration ;
- la figure 13 est une vue analogue à celle de la figure 12 du dispositif assemblé dans une deuxième configuration ;
- la figure 14 est une vue axonométrique d'une autre réalisation d'un dispositif selon l'invention ;
- la figure 15 est une vue en élévation latérale du dispositif de la figure 14.

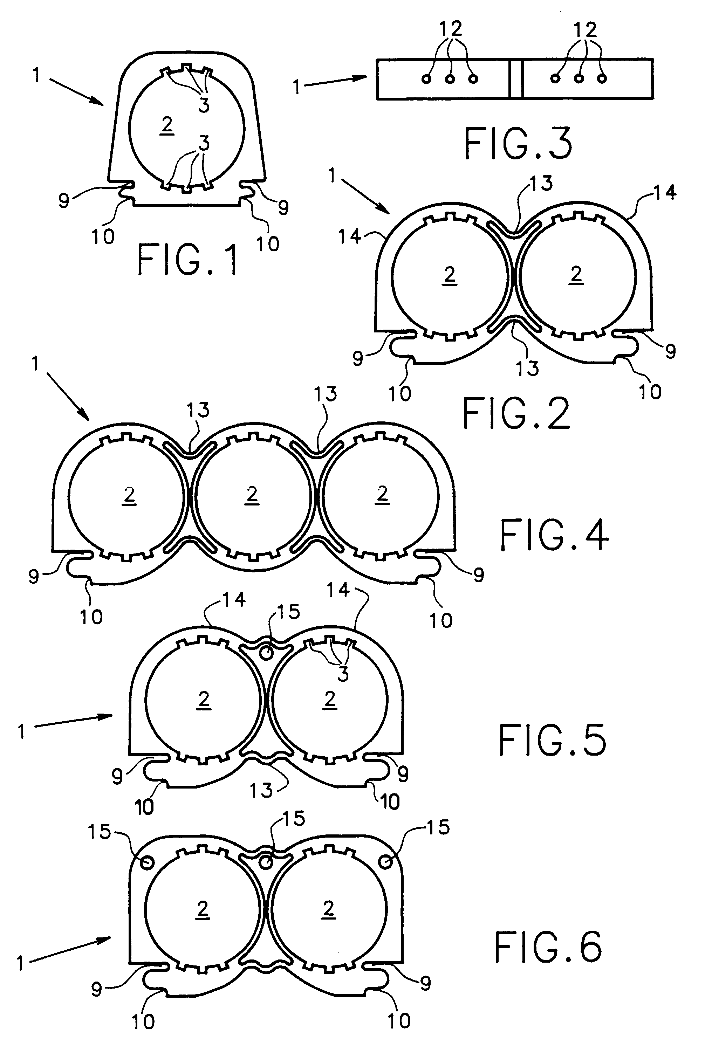

Sur les figures 1 à 15 on a utilisé les mêmes références pour désigner les mêmes éléments.

Sur les figures 1 à 7, l'on peut voir des platines 1 selon la présente invention comportant au moins une ouverture 2 de réception d'un embout, un moyen 3 de blocage en rotation de l'embout autour de son axe dans une pluralité d'orientations prédéterminées par rapport à la platine 1, et avantageusement, des moyens de fixation de la platine équipée d'un ou de plusieurs embouts sur un circuit de fluide, notamment un circuit de refroidissement d'un moteur thermique d'un véhicule automobile.

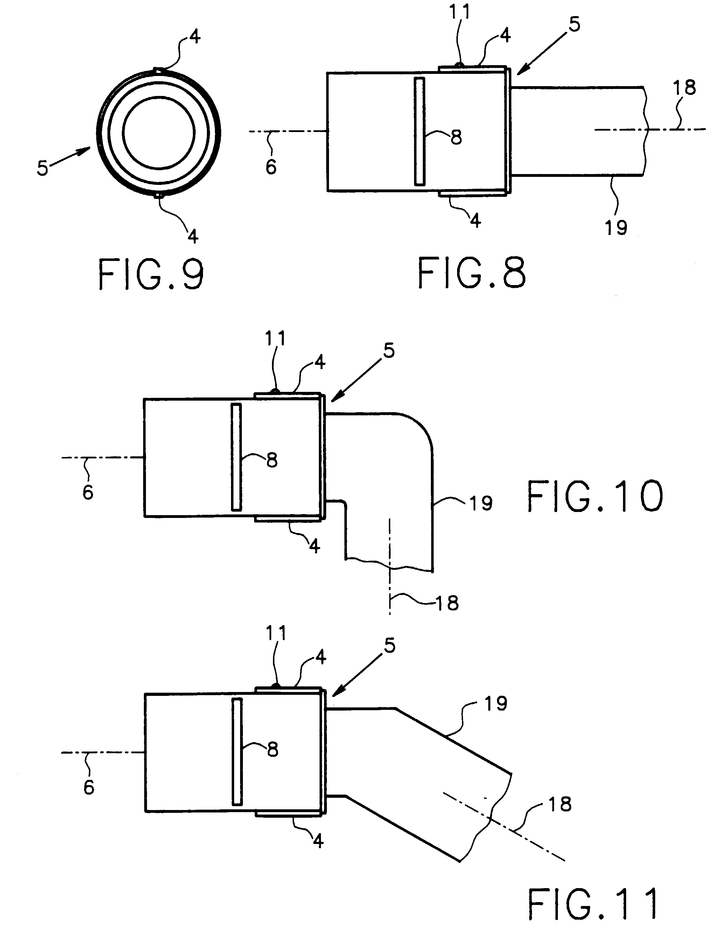

Sans que cela ne présente un quelconque caractère limitatif, les moyens de blocage en rotation des exemples de réalisations illustrés des dispositifs selon la présente invention comportent une pluralité de rainures 3 de réception d'une nervure 4 d'un quelconque des embouts 5 illustrés sur les figures 8 à 11. Les nervures 4 ainsi que les rainures 3 sont parallèles, dans une condition montée, à un axe 6 d'un embout 5 correspondant. Dans les exemples de réalisation illustrés, chaque embout 5 comporte deux nervures 4 diamétralement opposées, chaque ouverture 2 de réception d'un embout 5 de chaque platine 1 comportant trois paires de rainures diamétralement opposées.

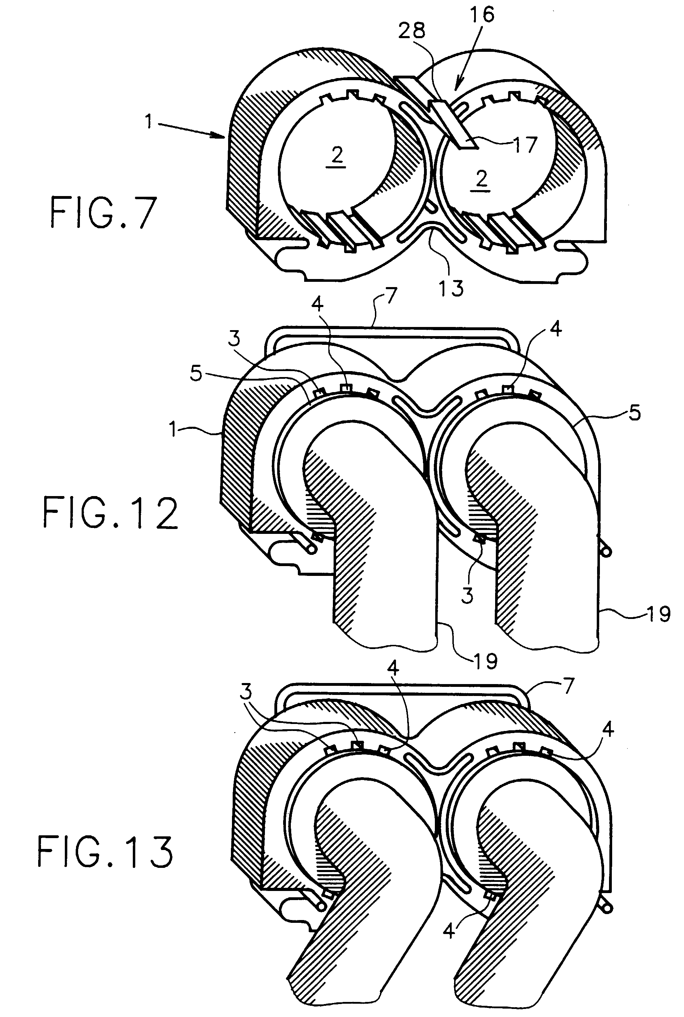

Avantageusement, le dispositif selon l'invention est verrouillé sur les circuits de fluides du moteur par une épingle 7, illustrée sur les figures 12 et 13, passant par des gorges ou ouvertures de passage 8 ménagées dans les embouts 5 et par une gorge logée dans les embouts du circuit de fluide du moteur non représenté. Avantageusement, lors du raccordement, l'épingle 7 est écartée par des rampes, par exemple tronconiques, ménagées dans les embouts du circuit de fluide et adjacentes auxdites gorges, permettant le verrouillage par translation des embouts 5 en direction des embouts du circuit de fluide, selon les axes 6.

Avantageusement, comme décrit dans la Demande de Brevet FR 92 06195, non publiée au jour de dépôt de la présente Demande de Brevet, l'épingle se trouve avant montage dans une première position, au voisinage immédiat des conduites tubulaires et, après réalisation du raccordement dans une seconde position, plus distante des conduites tubulaires, pour permettre le contrôle visuel du raccordement correct au circuit de fluide. Les exemples illustrés sur les figures 1, 2, et 4 à 6 de la platine 1 selon la présente invention comportent des gorges 9 de réception des extrémités de l'épingle 7 dans ladite seconde position et des épaulements 10 de réception des extrémités de l'épingle 7 dans ladite première position.

Les dispositifs selon l'invention comportent, de préférence, des moyens de verrouillage des embouts 5 dans les platines 1 empêchant que l'on effectue un démontage d'un dispositif de raccordement ayant une configuration désirée et que, par erreur, l'on ne respecte pas cette configuration lors du remontage. De plus, comme il sera expliqué plus loin, pour les platines recevant une pluralité d'embout de conduites tubulaires, il est possible de ne pas verrouiller tous les embouts 5 sur des embouts correspondants du circuit de fluide du moteur thermique.

Les moyens de verrouillage des embouts dans les platines comportent, par exemple, un bossage 11 porté par les embouts 5 et des ouvertures ou évidements 12 (figure 3) de réception dudit bossage ménagés dans les platines 1. Les embouts 5 sont insérés à force dans les ouvertures 2.

Sur la figure 1, on peut voir un premier exemple de réalisation d'une platine 1 selon la présente invention comportant une ouverture unique 2, de réception d'un embout 5, ladite platine 1 comportant une gorge 9 et un épaulement 10 destinés à la manipulation de l'épingle 7 lors du verrouillage sur un circuit de fluide du moteur.

Dans l'ouverture 2 de la platine 1 sont ménagées trois paires de rainures 3 de section rectangulaire diamétralement opposées permettant l'introduction de l'un des embouts 5 coudés des figures 10 et 11 avec six orientations différentes.

Il est bien entendu que le nombre, la forme et la disposition des rainures 3 n'est nullement limitative. Pour exemple, la mise en oeuvre d'une seule rainure 3 pour chaque orientation prédéterminée d'un embout associé avec des embouts 5 comportant une nervure 4 unique, la mise en oeuvre d'un le nombre de rainures ou des paires de rainures 3 égale à 2, 4, 5 ou plus, la mise en oeuvre de rainures de section triangulaire ou autre ne sortent pas du cadre de la présente invention.

De même, la mise en oeuvre d'une platine selon la figure 1 comportant un embout intégré ne sort pas du cadre de la présente invention.

Sur la figure 2, on peut voir une platine selon la présente invention comportant deux ouvertures 2 de réception d'embouts 5 de configuration sensiblement identique à celle de la platine 1 de la figure 1. La platine 1 comporte des éléments arqués de liaison 13 des carcasses 14 définissant les ouvertures 2. Avantageusement, les éléments de liaison 13 présentent une souplesse suffisante pour permettre de rattraper par leur déformation un écart de l'entraxe des embouts 5 par rapport à l'entraxe des embouts du circuit de fluide du moteur. Par exemple, la platine 1 est pourvue de deux éléments de liaison 13 arqués disposés dans la partie supérieure et inférieure, comme illustré, dont les faces convexes sont dirigées vers la platine ou au contraire dont les concavités se font face.

Sur la figure 4, on peut voir une platine 1 selon la présente invention dans laquelle ont été ménagées trois ouvertures 2 de réception des embouts 5 placées en ligne. Dans un tel cas, les embouts placés dans les ouvertures 2 des extrémités seront verrouillés par l'épingle 7. L'embout central comporte des moyens de verrouillage spécifiques et/ou est maintenu en place par la platine 1.

Il est bien entendu, que les platines 1 comportant un nombre supérieur d'ouvertures 2 de réception d'embouts placées en ligne, en triangle, ou selon une autre disposition ne sortent pas du cadre de la présente invention.

Sur la figure 5, l'on peut voir une platine 1 selon la présente invention sensiblement identique à la platine 1 de la figure 2 et comportant, fixée dans l'espace interne situé entre les deux carcasses 14, un élément dans lequel est ménagée une ouverture 15 de passage d'une conduite tubulaire de faible diamètre ou de réception d'un embout d'une telle conduite tubulaire.

Sur la figure 6, l'on peut voir une platine 1 selon la présente invention comportant deux ouvertures 2 de réception d'un embout 5 des figures 8 à 11 ainsi que trois ouvertures 15 de passage de conduites tubulaires de faible diamètre ou de réception d'embouts de telles conduites. Il est bien entendu que de telles conduites ou de tels embouts ne doivent pas gêner la manoeuvre d'un moyen de verrouillage du dispositif selon la présente invention, notamment de l'épingle 7.

Il est bien entendu que l'invention n'est pas limitée aux moyens de verrouillage du dispositif selon la présente invention mettant en oeuvre une épingle 7. Sur la figure 7, on peut voir une platine 1 selon la présente invention comportant un dispositif de verrouillage par encliquetage 16 comportant une rampe 17 terminée par un épaulement de retenue 28. La pénétration du dispositif 16 dans une ouverture, non représentée, solidarisée avec le moteur assure le verrouillage de la platine 1. Avantageusement, les moyens de verrouillage 16 comportent un dispositif de libération, non représenté.

Sur les figures 8 et 9, on peut voir un exemple d'un embout 5 droit, c'est-à-dire qu'au repos l'axe 18 de la conduite tubulaire 19 est placé dans le prolongement de l'axe 6 de l'embout 5. Il est bien entendu que l'on utilise avantageusement les conduites tubulaires flexibles qui sous contrainte peuvent adopter une configuration différente.

Il est à noter que la rotation de l'embout 5 autour de l'axe 6 ne modifie pas la géométrie générale du dispositif selon la présente invention. Toutefois, comme dans le cas des embouts des figures 10 et 11, cette rotation ne doit pas empêcher le verrouillage du dispositif. Par exemple les ouvertures de passage ou les fentes 8 doivent se trouver dans une position permettant le passage de l'épingle 7. Il peut s'avérer avantageux de munir chaque embout 5 selon la présente invention d'une pluralité de fentes 8 de façon à permettre le verrouillage du dispositif de la présente invention indépendamment de la configuration et de l'orientation des embouts 5 dans les platines 1.

Sur la figure 10, on peut voir un embout coudé présentant, au repos, un angle droit entre l'axe 6 de l'embout 5 et l'axe 18 de la conduite tubulaire 19.

Sur la figure 11, on peut voir un embout coudé 5, dont les axes 6 et 18 font entre eux un angle obtus.

Les rotations des embouts 10 ou 11 autour de leur axe 6 permettent, à partir d'un nombre limité d'éléments de base, d'adapter les dispositifs de raccordement selon la présente invention à la configuration par exemple d'un moteur thermique. Avantageusement, on met en oeuvre la configuration réalisable la plus proche de la configuration optimale. De même, il est possible de constituer un dispositif de raccordement selon la présente invention en disposant dans une platine deux embouts différents. Par exemple, on dispose dans une platine 1 de la figure 2 un embout 5 de la figure 8 et un embout 5 de la figure 10 ou de la figure 11. Les cas d'adaptation les plus fréquents sont illustrés sur les figures 12 et 13.

Sur les figures 12 et 13, on peut voir une platine 1 de la figure 2 sur laquelle on a disposé deux embouts 5 à angle droit de la figure 10. Les embouts 5 sont par exemple connectés au tuyau d'eau d'un circuit de refroidissement d'un moteur thermique, alors que les conduites tubulaires 19 sont reliées à l'entrée et la sortie d'un échangeur de chaleur ou aérotherme dudit véhicule.

Sur la figure 12, les nervures 4 des embouts 5 sont disposées dans les rainures 3 médianes, ce qui correspond à une disposition verticale de l'axe 18 des conduites 19.

Sur la figure 13, les nervures 4 des embouts 5 sont disposés dans les rainures 3 suivant, dans le sens des aiguilles d'une montre, la rainure médiane de la platine 1, en regardant en direction du moteur (non représenté).

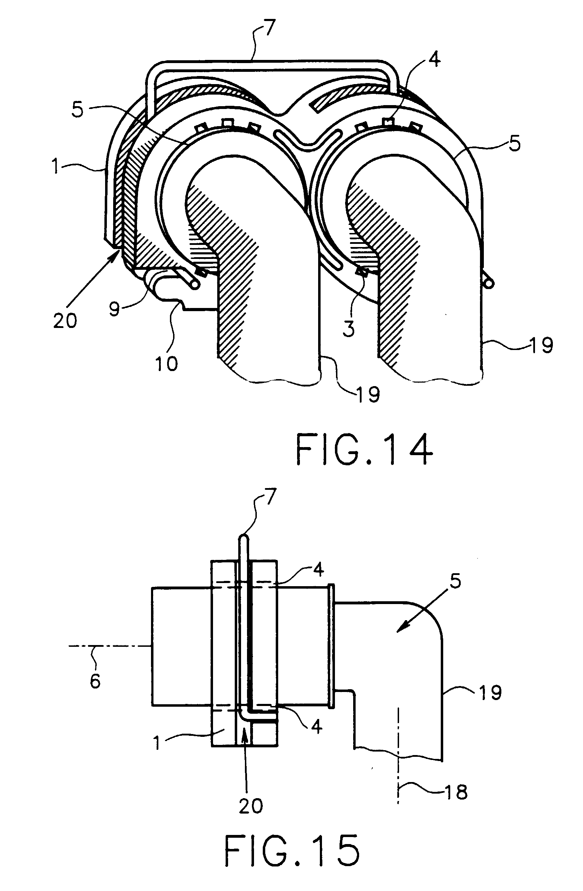

Sur les figures 14 et 15, on peut voir un exemple de réalisation préféré du dispositif selon la présente invention, comportant des moyens de fixation uniques permettant d'assembler les embouts d'un circuit de fluide du moteur, notamment les embouts de la boîte à eau, la platine 1 et les embouts 5 des conduites tubulaires, notamment des durites.

Il est bien entendu que chaque conduite tubulaire mise en oeuvre est réalisée dans une matière et avec un diamètre interne compatibles avec le bon fonctionnement du moteur, notamment avec la circulation de fluide dans des circuits étanches pendant de longues périodes pouvant atteindre et même dépasser une dizaine d'années. Les matières mises en oeuvre, et notamment la matière plastique, doivent supporter les fluides transportés, aux températures et aux pressions maximales admissibles. Il est bien entendu que le dispositif de raccordement selon la présente invention comporte des joints appropriés, non représentés sur les figures permettant d'assurer l'étanchéité requise.

La présente invention s'applique au raccordement de divers circuits de fluides, notamment pour un moteur thermique de véhicule automobile, comme par exemple le circuit de refroidissement, le circuit d'alimentation en essence, le circuit d'huile. De tels circuits peuvent éventuellement être complétés par des connecteurs, des câbles électriques ou des fibres optiques ainsi que par des gaines de câbles mécaniques de commande.

La présente invention s'applique principalement au raccordement des tuyaux d'eau d'une boîte à eau d'un circuit de refroidissement d'un moteur thermique de véhicule automobile à un échangeur de chaleur ou aérotherme.

## Revendications

1. Dispositif de raccordement de conduites tubulaires à un circuit de fluide d'un moteur thermique, notamment aux tuyaux d'eau d'un circuit de refroidissement, caractérisé en ce qu'il comporte une platine (1) de raccordement comprenant au moins une carcasse (14) dans laquelle est pratiquée une ouverture (2) de réception d'un embout (5) d'une conduite tubulaire (19) et des moyens (3) de blocage en rotation autour de son axe (6) dudit embout (5) dans une pluralité d'orientations prédéterminées, les moyens de blocage comportant les rainures de réception d'une nervure (4) de l'embout (5), et au moins un, de préférence deux, embout(s) (5), chacun comportant au moins une nervure de verrouillage en rotation autour de son axe (6), dans des orientations prédéterminées, susceptibles de coopérer avec les moyens de blocage en rotation de la platine (1), dans lesdites orientations prédéterminées, et en ce que le nombre de rainures des moyens de blocage de la platine est supérieur au nombre de nervures de l'embout.

2. Dispositif selon la revendication 1, caractérisé en ce qu'il comporte des moyens de verrouillage uniques, notamment une épingle (7), associés à des ouvertures de passage (20) pour verrouiller simultanément un embout (5) d'une conduite tubulaire sur un embout d'un circuit de fluide d'un moteur thermique et sur la platine (1).

3. Dispositif selon l'une quelconque des revendications précédentes, caractérisé en ce que la platine comporte des éléments de liaison (13) semi-rigides ou souples reliant les carcasses (14) dans lesquelles ont été pratiquées des ouvertures (2) de réception d'un embout (5).

4. Dispositif selon l'une quelconque des revendications précédentes, caractérisé en ce que la platine comporte des moyens (12) de verrouillage des embouts (5) disposés dans les ouvertures (2) notamment des évidements ou des ouvertures de réception d'un bossage (11) pratiqué sur l'embout (5).

5. Dispositif selon l'une quelconque des revendications 2 à 4, caractérisé en ce que la platine comporte une gorge (9) de réception des extrémités d'une épingle (7) de verrouillage du dispositif de raccordement.

6. Procédé de fabrication d'un dispositif de raccordement de conduites tubulaires à un circuit de fluide d'un moteur thermique, caractérisé en ce qu'il comporte une étape consistant à insérer au moins un embout (5) coudé présentant une orientation radiale prédéterminée, désirée, par rapport à son axe (6), dans une ouverture de réception (2) d'une platine (1), ladite platine comportant un nombre de rainures de réception de nervures de l'embout supérieur au nombre de nervures dudit embout.

7. Procédé selon la revendication 6, caractérisé en ce qu'il comporte en outre une étape préalable de détermination de la forme et de l'orientation de l'embout (5) adaptées de façon optimale à la configuration d'un moteur thermique et une étape consistant à choisir la configuration prédéterminée la plus proche de cette configuration adaptée de façon optimale.

## Patentansprüche

1. Vorrichtung zum Anschluß von rohrförmigen Leitungen an einen Strömungsmittelumlauf einer Wärmekraftmaschine, insbesondere an die Wasserrohre eines Kühlkreislaufs, dadurch **gekennzeichnet,** daß sie eine Anschlußplatte (1) aufweist, die mindestens einen Rahmen (14) aufweist, in den eine Öffnung (2) zur Aufnahme eines Ansatzstücks (5) einer Rohrleitung (19) eingebracht ist, sowie Mittel (3) zur Sperrung des genannten Ansatzstücks (5) bezüglich seiner Drehung um seine Achse (6) in einer Anzahl vorbestimmter Ausrichtungen, wobei die Sperrmittel Rillen zur Aufnahme einer Rippe (4) des Ansatzstücks (5) aufweisen, sowie mindestens ein und bevorzugt zwei Ansatzstücke (5), von denen jedes eine Verriegelungsrippe zur Verriegelung bezüglich der Drehung um seine Achse (6) in vorbestimmten Ausrichtungen aufweist, die imstande sind, mit den Mitteln zur Sperrung der Platine (1) bezüglich der Drehung in den genannten vorbestimmten Ausrichtungen zusammenzuwirken, und daß die Anzahl von Rillen der Sperrmittel der Platte größer ist als die Anzahl von Rippen des Ansatzstücks.

2. Vorrichtung nach Anspruch 1, dadurch **gekennzeichnet,** daß sie einheitliche Verriegelungsmittel aufweist, insbesondere einen Verriegelungsstift (7), die Durchtrittsöffnungen (20) zugeordnet sind, um gleichzeitig ein Ansatzstück (5) einer Rohrleitung auf einem Ansatzstück eines Strömungsmittelkreislaufes einer Wärmekraftmaschine und auf der Platte (1) zu verriegeln.

3. Vorrichtung nach irgendeinem der vorangehenden Ansprüche, dadurch **gekennzeichnet**, daß die Platte halbstarre oder weiche Verbindungselemente (13) aufweist, die die Rahmen (14) verbinden, in die die Öffnungen (2) zur Aufnahme eines Ansatzstücks (5) eingebracht sind.

4. Vorrichtung nach irgendeinem der vorangehenden Ansprüche, dadurch **gekennzeichnet,** daß die Platte Mittel (12) zur Verriegelung der Ansatzstücke (5) aufweist, die in den Öffnungen (2) angeordnet sind, insbesondere Aussparungen oder Öffnungen zur Aufnahme eines Höckers (11), der auf dem Ansatzstück (5) ausgebildet ist.

5. Vorrichtung nach einem der Ansprüche 2 bis 4, dadurch **gekennzeichnet,** daß die Platte eine Rille (9) zur Aufnahme der Enden eines Verriegelungsstifts (7) der Anschlußvorrichtung aufweist.

6. Verfahren zur Herstellung einer Vorrichtung zum Anschließen von Rohrleitungen an einen Strömungsmittelumlauf einer Wärmekraftmaschine, dadurch **gekennzeichnet,** daß es einen Schritt aufweist, der darin besteht, mindestens ein abgewinkeltes Ansatzstück (5), das eine vorbestimmte, gewünschte, radiale Ausrichtung in Bezug auf seine Achse (6) aufweist, in eine Aufnahmeöffnung (2) einer Platte (1) einzuführen, wobei die genannte Platte eine Anzahl von Aufnahmerillen für Rippen des Ansatzstücks aufweist, die größer ist als die Anzahl von Rippen des genannten Ansatzstücks.

7. Verfahren nach Anspruch 6, dadurch **gekennzeichnet,** daß es außerdem einen vorhergehenden Schritt der Bestimmung der Form und der Ausrichtung des Ansatzstücks (5) aufweist, die optimal an die Ausbildung einer Wärmekraftmaschine angepaßt sind, und einen Schritt, der darin besteht, eine dieser optimal angepaßten Ausbildung nächstkommende Ausbildung zu wählen.

## Claims

1. Device for connecting tubular conduits to a fluid circuit of a heat engine, in particular to the water pipes of a cooling circuit, characterized in that it has a connection plate (1) comprising at least one frame (14) in which there is formed an opening (2) for receiving an end piece (5) of a tubular conduit (19) and means (3) for blocking the said end piece (5), in a plurality of predetermined orientations, from rotating about its axis (6), the blocking means having the grooves for receiving a rib (4) of the end piece (5), and at least one, preferably two, end piece(s) (5), each having at least one rib for locking rotation about its axis (6), in predetermined orientations, which are capable of cooperating with the rotation blocking means of the plate (1), in the said predetermined orientations, and in that the number of grooves of the blocking means of the plate is greater than the number of ribs of the end piece.

2. Device according to Claim 1, characterized in that it has single locking means, in particular a pin (7), associated with passage openings (20) for simultaneously locking an end piece (5) of a tubular conduit on an end piece of a fluid circuit of a heat engine and on the plate (1).

3. Device according to any one of the preceding claims, characterized in that the plate has semi-rigid or flexible joining elements (13) connecting the frames (14) in which openings (2) for receiving an end piece (5) have been formed.

4. Device according to any one of the preceding claims, characterized in that the plate has means (12) for locking the end pieces (5) arranged in the openings (2), in particular cutouts or openings for receiving a boss (11) formed on the end piece (5).

5. Device according to any one of Claims 2 to 4, characterized in that the plate has a recess (9) for receiving the ends of a locking pin (7) of the connection device.

6. Method of producing a device for connecting tubular conduits to a fluid circuit of a heat engine, characterized in that it has a step which consists in inserting at least one elbow end piece (5), having a desired predetermined radial orientation with respect to its axis (6), in a receiving opening (2) of a plate (1), the said plate having a greater number of grooves for receiving ribs of the end piece than the number of ribs of the said end piece.

7. Method according to Claim 6, characterized in that it further has a preliminary step of determining the shape and the orientation of the end piece (5) which are optimally adapted to the configuration of a heat engine and a step consisting in selecting the predetermined configuration which is closest to this optimally adapted configuration.
